(19) Europäisches Patentamt
European Patent Office
Office européen des brevets

(11) **EP 2 007 680 B1**

(12) **EUROPEAN PATENT SPECIFICATION**

(45) Date of publication and mention
of the grant of the patent:
**15.08.2012 Bulletin 2012/33**

(51) Int Cl.:
*C01C 1/04* (2006.01)     *C01B 3/04* (2006.01)
*C01B 21/082* (2006.01)     *B01J 27/24* (2006.01)

(21) Application number: **07711945.1**

(22) Date of filing: **14.03.2007**

(86) International application number:
**PCT/EP2007/002262**

(87) International publication number:
**WO 2007/104554 (20.09.2007 Gazette 2007/38)**

(54) **USE OF ZIRCONIUM OXYNITRIDE CATALYSTS FOR AMMONIA DECOMPOSITION**

VERWENDUNG VON ZIRCONIUMOXIDNITRID-KATALYSATOREN ZUR ZERSETZUNG VON AMMONIAK

UTILISATION DE CATALYSEURS OXYNITRURES DE ZIRCONIUM LORS DE LA DECOMPOSITION DE L'AMMONIAC

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.03.2006 EP 06005209**

(43) Date of publication of application:
**31.12.2008 Bulletin 2009/01**

(73) Proprietor: **Max-Planck-Gesellschaft zur Förderung
der Wissenschaften e.V.
80539 München (DE)**

(72) Inventors:
• **SOERIJANTO, Hary
13351 Berlin (DE)**
• **RÖDEL, Christoph
12555 Berlin (DE)**
• **LERCH, Martin
13595 Berlin (DE)**
• **SCHOMÄCKER, Reinhard
13589 Berlin (DE)**
• **SCHLÖGL, Robert
10825 Berlin (DE)**
• **RESSLER, Thorsten
14532 Stahnsdorf (DE)**
• **WILD, Ute C/O Antje Wild
84034 Landshut (DE)**

(74) Representative: **Weiss, Wolfgang et al
Weickmann & Weickmann
Patentanwälte
Postfach 86 08 20
81635 München (DE)**

(56) References cited:
**WO-A-03/053913    GB-A- 1 126 813**

## Description

The present invention refers to the use of metal oxynitrides, e.g. zirconium oxynitrides as catalysts, particularly in the decomposition of ammonia.

Hydrogen constitutes one of the promising candidates as an energy carrier in the quest for a replacement of fossil fuels particularly in mobile applications. The future use of hydrogen to generate power in one of the various available types of fuel cells appears to be commonly agreed on. Conversely, the proper way of storing hydrogen is still being debated. In addition to high-pressure or cryogenic hydrogen, physisorbed hydrogen, or metal hydrides, small hydrogen containing molecules can be employed as hydrogen carriers in an on-board reforming process. The reforming of fossil fuels is economically and ecologically questionable at best. Conversely, methanol, for instance, can be obtained from biomaterials or from methanol synthesis plants being operated at remote locations where hydrogen is available, for instance, from solar energy plants. Thus, methanol is often regarded as being a suitable replacement for fossil fuels. However, the major disadvantage of using carbon containing hydrogen storage molecules is the formation of carbon monoxide during the reforming process. Because the latter acts as a fuel cell poison, it needs to be removed in down-stream gas purification units, which reduces the overall efficiency of the reforming process. Moreover, steam reforming of carbon-containing hydrogen sources results in the formation of carbon dioxide which posses additional ecological concerns.

As a potential alternative to methanol, ammonia can be used as a hydrogen carrier. Like methanol synthesis, ammonia synthesis is a well-understood, large-scale industrial process that also can be operated at any place where inexpensive hydrogen is available. In principle, the subsequent production of hydrogen by decomposition of ammonia is a particularly clean process that yields only hydrogen and nitrogen. However, many of the known metal catalysts for ammonia decomposition produce significant amounts of hydrazine during ammonia decomposition. Hence, similar to carbon monoxide, any hydrazine formed would have to be removed in a subsequent gas purification unit. Thus, new catalysts need to be developed that possess high catalytic active in ammonia decomposition without formation of hydrazine.

GB 1 126 813A refers to solid solutions of transition metal nitrides and oxinitrides and methods of their preparation.

WO 03/053 913 A1 relates to processes for the oxidative conversion of hydrocarbons to nitriles, and to metallo-oxynitride catalysts useful for performing said ammoxidation.

US 3, 730,774 describes an ammonia fuel cell with iridium catalysts and a method of using the cell.

Nitrogen-conducting zirconium oxynitrides are known in the art [1,2]. Here we describe first catalysis studies linking the catalytic behavior in the decomposition of ammonia to the onset of nitrogen mobility in the bulk structure of a zirconium oxynitride catalyst.

A first aspect of the present invention refers to the use of a metal oxynitride as a catalyst for the decomposition of ammonia. The metal oxynitride is preferably a compound with nitrogen conducting properties, such as zirconium oxynitride, tantal oxynitride and niobium oxynitride and combinations thereof. Especially preferred is zirconium oxynitride.

The ammonia decomposition may be carried out in any suitable reactor system, e.g. an ammonia fuel cell such as disclosed in US 2004/0253492. The catalyst may be in any suitable form, e.g. in form of particles, pellets etc. The catalyst may also be supported on a carrier. The reaction is preferably carried out at a temperature of at least about 300°C, more preferably of at least about 500°C, e.g. between 300°C and 750°C.

The metal oxynitride catalyst may be prepared by conventional means, e.g. by heating and optionally compressing the respective metal oxide, e.g. $ZrO_2$ under a nitrogen atmosphere at elevated temperatures of e.g. about 1900°C. Further, suitable catalysts may be prepared by ammonolysis of metal salts and related precursors.

The metal oxynitride catalyst of the invention preferably comprises a nitrogen conducting metal oxynitride phase. A zirconium oxynitride catalyst preferably comprises a nitrogen conducting zirconium oxynitride phase such as β" zirconium oxynitride phase which may have a composition of e.g. $Zr_7O_{9.5}N_3$ and may additionally contain a nitrogen-free zirconium oxide phase, e.g. monoclinic $ZrO_2$. The preferred β" zirconium oxynitride phase may be generated by heating a zirconium oxynitride precursor, e.g. a β' zirconium oxynitride phase, e.g. $Zr_7O_{11}N_2$ and optionally a nitrogen-free zirconium oxide phase to a suitable temperature, wherein phase transition to a nitrogen-conducting zirconium oxynitride phase takes place, e.g. at a temperature of about 500°C or higher, preferably about 550°C or higher.

Surprisingly, it was found that an ammonia decomposition reaction with a zirconium oxynitride catalyst may be carried out without formation of substantial amounts of hydrazine. Thus, the use of metal oxynitride catalysts allows the use of ammonia decomposition reactors without further hydrazine removal means.

A further aspect of the present invention refers to a method for the catalytic decomposition of ammonia which is carried out with a metal oxynitride catalyst as described above.

Still a further aspect of the invention refers to an ammonia fuel cell for the catalytic decomposition of ammonia comprising an ammonia inlet; at least one reactor zone comprising a metal oxynitride catalyst and an hydrogen outlet.

Further, the invention is explained. in more detail in the following Figures and Examples.

**Figure legend**

Figure 1: Evolution of XRD patterns measured during thermal treatment of a mixture of zirconium oxynitride (•) and $ZrO_2$ (♦) in the temperature range from 100°C to 750°C. The phase change from the β' ZrON phase to the β" ZrON phase is indicated (bar).

Figure 2: Evolution of ammonia conversion as a function of temperature during ammonia decomposition (feed 50 ml/min He with 4100 ppm $NH_3$) on $Fe_3O_4$, ZrON (heating and cooling), and blank reactor (glass beads).

Figure 3 Conversion of ammonia on 4 g ZrON measured at various feed concentrations. The solid line represents a refinement of a first order reaction kinetics according to eqn. 1 to the data obtained for 6950 ppm $NH_3$ in the feed.

Figure 4: Evolution of width (top) and position (bottom) of XPS Zr $3d_{3/2}$ peak of β' ZrON during heating and subsequent cooling. The dashed line indicates the onset of the phase change from β' ZrON to β" ZrON and catalytic activity.

Figure 5: Schematic arrangement of an ammonia decomposition reactor P = pressure reducer, MFC = mass flow controller, HE = heat exchanger, WF = wash flask, filled with $H_2SO_4$.

**1. Experimental**

*Catalyst Preparation*

Zirconium oxynitride pellets were prepared from isostatically pressed commercial zirconia powder nitrided at 1900°C in nitrogen atmosphere for 2 h (graphite heated resistance furnace), resulting in a mixture of nitrogen-free monoclinic $ZrO_2$ and the ß"-type of zirconium oxynitride phases (~$Zr_7O_{9.5}N_3$) [7]. Subsequently, the material was quenched from a vertical tube furnace from 1300°C (nitrogen atmosphere) in water. X-ray analysis after quenching shows a reduced amount of monoclinic zirconia and the metastable ß'-phase of zirconium oxynitride (~$Zr_7O_{11}N_2$). [3] For the catalysis testing described here a sample consisting of 51 wt-% $ZrO_2$ and 49 % β' phase was used. Hot gas extraction of the as-prepared material yielded a total amount of nitrogen of 1.63 wt-% (theoretical 1.62 wt-%). After three month time on stream during ammonia decomposition the material exhibited only a minor decrease in the amount of nitrogen (-0.30 wt-%).

*In situ XRD*

For the high-temperature X-ray diffraction experiments a STOE STADIP diffractometer (CuKα₁-radiation, A = 0.15406 nm) equipped with a graphite heated resistance furnace was used. The oxynitride powders were filled into capillaries under nitrogen and heated up at a rate of 20 Kmin⁻¹. At a given temperature, diffraction data were collected for 15 minutes using a position sensitive detector after an annealing time of 15 minutes.

*Catalyst testing*

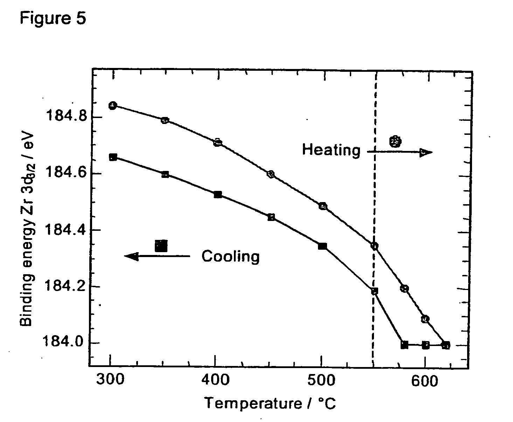

Catalysis measurements of the decomposition of ammonia ($NH_3 \rightarrow 0.5\,N_2 + 1.5\,H_2$, $\Delta H^0 = +46.2$ kJ/mol) were performed at atmospheric pressure in a PFTR reactor (stainless steel) heated to the corresponding reaction temperature. A schematic drawing of the catalysis set-up used is depicted in Figure 5. The reactor temperature was manually increased in steps of 20 K. After each temperature step a spiked increase in conversion was observed followed by a slowly decreasing conversion with time on stream. Steadystate conversion was reached after about 10 min. The conversion data retorted here were determined after 20 min time on stream at the corresponding temperature.

The amount of ammonia and helium in the feed was adjusted by massflow controllers (Bronkhorst). This arrangement permits setting different ammonia partial pressures at different flow rates, resulting in different contact times. The massflow controller for ammonia needed a special seal and a reliable pressure reducer of particular precision in order to properly adjust small flow rates of ammonia. The PFTR reactor was mounted int a heating block (brass, 80 mm in diameter, 150 mm length), equipped with six high temperature heating cartridges of 220 Watt and heated to the desired to the desired temperature. The heating block is prepared to accommodate three reactors, enabling measurements with three catalysts under the same conditions within one test series. One reactor loaded with glass beads served as a blank reactor to determine the thermal and reactor contribution to the conversion of ammonia. The second reactor was filled with an iron oxide catalyst (1 g $Fe_3O_4$ (magnetite) + 1mol% $K_2CO_3$ + 4 mol% $Al_2O_3$) which acted as a conventional reference catalyst for ammonia synthesis [8]. The third reactor was filled with the zirconium oxynitride catalyst (4 g zirconia oxynitride (0,3 - 1 mm particles and a BET surface area below - 1 m²/g). Glass beads were placed above and below the catalyst bed to ensure that the feed gases and the catalyst powder possess the same preset temperature in the reaction zone.

The outlet gases were cooled to -10°C to assure that the product stream of different experiments are at the same temperature before they reach the ammonia sensor (Binos IR detector, Rosemount). Afterwards the outlet gases were washed with sulfurid acid. 4-(dimethylamino)-benzaldehyde was added to test for hydrazine in the reaction product. Even after two weeks of time on stream, no hydrazine was detectable.

*X-ray photoelectron spectroscopy (XPS)*

XPS measurements were performed in a modified LIS/SPECS EA200 MCD system equipped with facilities for XPS (Mg $K_\alpha$ 1253.6 eV, 168 W power) and UPS (He I 21.22 eV, He II 40.82 eV). For the XPS measurements a fixed analyser pass energy of 48 eV was used resulting in a resolution of 0.97 eV FWHM of the Ag $3d_{5/2}$ intensity. The binding energy scale was calibrated using Au $4f_{7/2}$ = 84.0 eV and Cu $2p_{3/2}$ = 932.67 eV. The base pressure of the UHV analysis chamber amounted to $10^{-10}$ mbar. The ZrON catalyst was deposited on a stainless steel sample holder with minimized exposure to air. The sample was heated to the corresponding measuring temperatures at a rate of 1 K/s. Quantitative data analysis was performed by subtracting a Shirley background [9] and using empirical cross sections [10].

## 2. Results

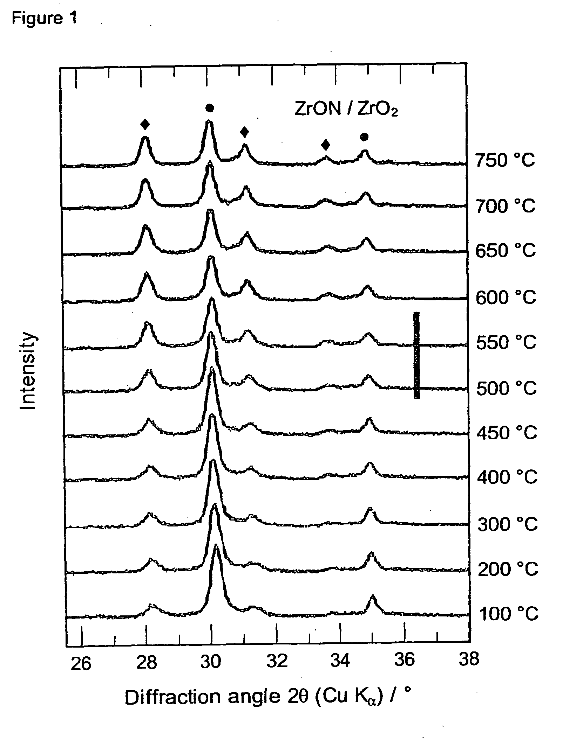

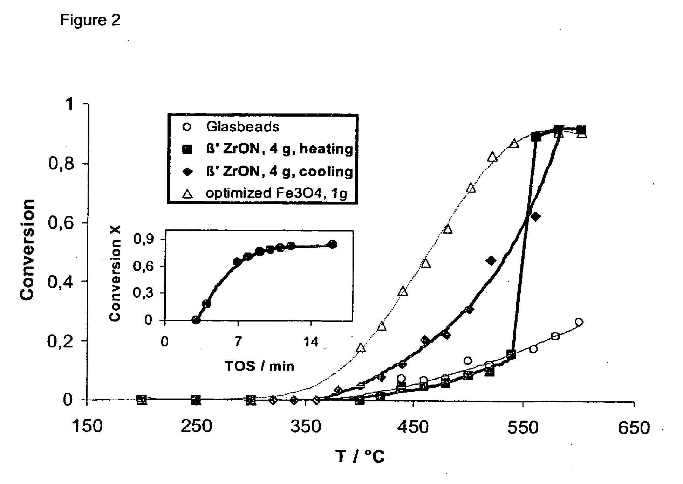

X-ray analysis of the as-prepared material shows a mixture of monoclinic zirconia and the metastable ß'-phase of zirconium oxynitride ($\sim Zr_7O_{11}N_2$) (Figure 1). This material was used for catalysis testing and characterization and is referred to as ZrON in the following. The conversion of ammonia as a function of temperature measured during ammonia decomposition (feed 4100 ppm $NH_3$) on a conventional iron catalyst (mostly $Fe_3O_4$), the ZrON catalyst (heating and cooling), and the blank reactor (glass beads) is depicted in Figure 2. The iron oxide catalyst showed an onset of activity in the decomposition of ammonia at -340°C. Conversely, measurements of the as-prepared ZrON yielded only low activity below about 550°C. However, upon increasing the reaction temperature further, the zirconium oxynitride exhibited a jump in activity of ammonia decomposition at a temperature of -550°C (Fig. 2). At reaction temperatures above -550°C the activity of the material was similar to that of a conventional iron catalyst. The dynamics of the jump in activity at -550°C is shown in the inset of Fig. 2. Upon subsequently cooling down to ambient temperature, the ZrON catalyst showed a continuous decrease in ammonia conversion.

Compared to the conventional iron oxide catalyst, the sudden increase of catalytic activity of ZrON at -550°C does not correspond to a regular increase in activity with increasing reaction temperature. Because of the endothermic nature of the ammonia decomposition reaction, an ignition behavior of the reactor can be ruled out. Hence, rapid bulk structural changes have to be assumed as origin of the catalytic activity observed. As known from our high-temperature XRD work, reheating the as-prepared metastable mixture of nitrogen-poor ß'-phase ($Zr_7O_{11}N_2$) and nitrogen-free monoclinic $ZrO_2$ in nitrogen results in a further demixing to the nitrogen-rich ß"-phase ($Zr_7O_{9.5}N_3$) and an increased amount of m-$ZrO_2$ at 550°C (Figure 1). [3] Structurally, the ß'- and ß"-phases can be described as anion-deficient fluorite types with ordered anion vacancies, whereas the ß'-phase is strongly disordered. [4,5] The ß" ZrON phase contains a larger amount of nitrogen ions in the lattice than the β'phrase, accompanied by an increased amount of vacancies in the oxygen sublattice [5]. Apparently, the phase demixing requires an increased mobility of nitrogen ions in the ZrON structure to enable migration of nitrogen ions and the formation of β" ZrON and $ZrO_2$. Therefore, the change from the β' to the β" ZrON phase is a suitable indicator for the onset of nitrogen ion conductivity in the ZrON catalyst studied.

The sudden onset of catalytic activity in ammonia decomposition on ZrON corresponds very well to the phase change from the initial β' phase to β" ZrON (Figure 1). Apparently, the β' phase exhibits only minor activity in ammonia decomposition while the β" ZrON phase possesses a considerably activity similar to that of a conventional iron catalyst. In order to explain the observed correlation, in addition to the increased amount of nitrogen in the β" phase, we assume an increased nitrogen mobility of the β" ZrON phase compared to the β' phase. Both may be a prerequisite for this material to function as an active catalyst for ammonia decomposition. Hence, the reduced amount and mobility of nitrogen in the initial β' phase is not sufficient to merit a detectable catalytic activity.

Upon cooling down, X-ray diffraction studies on the phase change of β' ZrON to β". ZrON have shown, that the β" phase persists and does not change black to β' ZrON. [3] This metastabitity of the β" ZrON phase is nicely reflected in the conversion of ammonia during the cool-down period. Even below the phase demixing temperature, the increased amount of nitrogen and its mobility in the β" ZrON phase results in an improved activity compared to the β' phase. Moreover, upon cooling, the ammonia conversion on β" ZrON exhibits a more regular behavior as a function of temperature. Subsequent increasing temperature of the catalyst under reaction conditions resulted in a regular increase in activity that coincides with the cooling curve of the first temperature cycle.

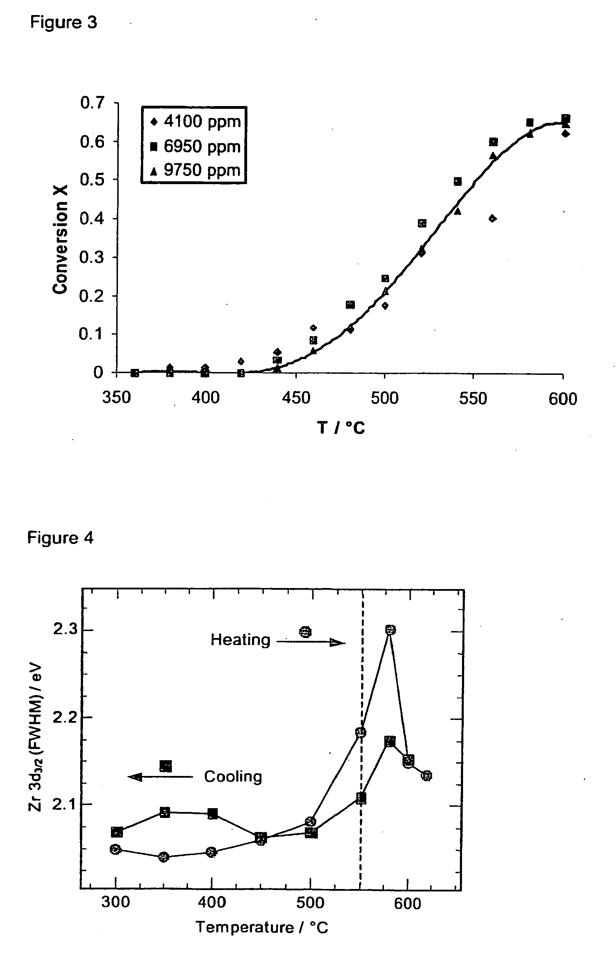

In order to determine the activation energy of ammonia decomposition on ZrON catalysts, the partial pressure of ammonia in the feed was varied and the conversion of ammonia was determined as a function of temperature. The ammonia conversion over ZrON at a given temperature and residence time was independent of the ammonia partial pressure (Figure 3). It can be assumed that the ZrON catalyst was not saturated under the applied conditions and, hence, the results obtained indicate a first order reaction.

For a first order reaction the solution of the material balance of a PFTR gives the following equation (1) for the conversion:

$$X = 1 - \exp(-c_{kat} k)$$

With $X = (p_{NH3,0} - p_{NH3})/ p_{NH3,0}$.

With the temperature dependency of rate constant according to the Arrhenius equation

$$k = A \exp(-E_A/RT)$$

the activation energy EA can be determined by fitting eqn. (1) to the conversion data as function of temperature (Figure 3). This evaluation yielded an apparent activation energy of 95 kJ/mol. This value is in good agreement with activation energies assumed for ion conductivity in zirconium oxynitride based materials [1] and confirms the importance of a sufficient amount and mobility of nitrogen in ZrON catalysts for ammonia decomposition. Moreover, while the formation of hydrazine appears to be inevitable on conventional reduced metal catalysts for ammonia decomposition, no formation of hydrazine was detectable on the ZrON catalyst. The absence of detectable amounts of hydrazine is indicative of a different mechanism of ammonia decomposition on ZrON, for instance, compared to partially reduced conventional iron oxide catalysts. Additionally these catalysts exhibit an apparent activation energy of - 30 kJ/mol as calculated from the difference of reaction enthalpie and Activation energy od ammonia synthesis. [6] This further corroborates the correlation between onset of catalytic activity and nitrogen mobility in the bulk of the ZrON catalyst as a new mechanistic concept for this class of materials.

In addition to bulk structural properties, the electronic structure of the surface of the ZrON catalyst as a function of temperature was studied by X-ray photoelectron spectroscopy (XPS). The Zr 3d doublet exhibited only minor changes in shape and position during heating and cooling. However, a detailed peak profile analysis revealed a characteristic broadening of the Zr 3d peak at ~550°C and a shift in binding energy (Figure 4). The corresponding change in the electronic structure of the ZrON catalyst coincides with the onset of catalytic activity (Figure 2) and nitrogen ion mobility of β" ZrON (Figure 1). The increasing and decreasing Zr 3d peak broadening observed as a function of temperature indicates a differential charging and a transition state of the ZrON surface structure that accompanies the phase change from β' ZrON to the characteristically ordered β" ZrON phase together with an increased amount of monoclinic $ZrO_2$. Subsequently, the resulting surface structure of the β" ZrON phase persists (Figure 4) and retains its catalytic activity even at temperatures below 560°C (Figure 2). Moreover, a quantitative analysis of the XPS data revealed an increasing amount of nitrogen at the surface of the ZrON material after heating to 600°C (~8 wt-%). Apparently, the dynamic behavior of the surface of the ZrON catalyst under reaction conditions accompanies the phase change in the ZrON material at ~550°C. Hence, the formation of the nitrogen rich β" ZrON phase is particularly detectable at the surface confirming the assumption of nitrogen mobility and β" phase formation as prerequisites for activity of ZrON in ammonia decomposition.

In summary, the zirconium oxynitride studied showed a remarkable catalytic activity in the decomposition of ammonia. Compared to conventional metal containing catalysts, the ZrON catalysts exhibited no formation of hydrazine during extended time on stream. While the as-prepared β' phase of ZrON shows only little activity, a sudden increase in activity at ~550°C coincides with the onset of nitrogen ion conductivity in the material and the phase change to the nitrogen rich β" ZrON phase. The dramatic change in activity is also correlated to a rapid change in the electronic structure of the surface that accompanies the formation of the more active β" ZrON phase. Together with an apparent activation energy of 95 kJ/mol that coincides well with the activation energy of ion conductivity in zirconia based materials, the results presented show for the first time a direct correlation between the onset of ion conductivity as a bulk property, a modified electronic structure of the surface, and the catalytic performance of a heterogeneous catalyst.

## Literature:

[1] J. Wendel, M. Lerch, W. Laqua, J. Solid State Chem. 142 (1999) 163-167.

[2] M. Kilo, A.M. Taylor, C. Argirusis, G. Borchardt, M. Lerch, O. Kaitasov, B. Lesage, PCCP 6(13) (2004) 3645-3649.

[3] M. Lerch, O. Rahäuser, J. Mat. Sci. 32 (1997), 1357-1363.

[4] A.T. Tham, C. Rödel, M. Lerch, D. Wang, D.S. Su, A. Klein-Hoffman, R. Schlögl, Cryst. Res. Techn., 39 (5), (2004), 421-428.

[5] A.T. Tham, C. Rödel, M. Lerch, D.S. Su, A. Klein-Hoffman, R. Schlögl, Cryst. Res. Techn., 40(3), (2005), 193-198.

[7] M. Lerch, J. Am. Ceram. Soc., 79 (10), (1996), 2641-2644

[8] H. Bakemeier, H. Grössling, R. Krabetz, BASF Aktiengesellschaft Ludwigshafen, Ullmans Enzyklopädie der technischen Chemie, Band 7 (1973) 444-513.

[9] D.A. Shirley, High-resolution X-ray photoemission spectrum of the valence bands of Gold, Phys. Rev.. B: Solid State 5 (12) (1972) 4709-4714.

[10] Briggs and Seah "Practical Surface Analysis" second edition, Volume1-Auger and X-ray Photoelectron Spectroscopy, Wiley, 1990 pp.635-638 (Appendix 6).

**Claims**

1.  Use of a metal oxynitride as a catalyst for the decomposition of ammonia for the production of hydrogen.

2.  The use of claim 1, wherein the decomposition is carried out at a temperature of at least 300°C.

3.  The use of claims 1 or 2, wherein the catalyst comprises a nitrogen conducting metal oxynitride phase.

4.  The use of any of claims 1-3, wherein the catalyst is a zirconium oxynitride.

5.  The use of claim 4, wherein the catalyst comprises a β" zirconium oxynitride phase.

6.  The use of any one of claims 1-5, wherein an ammonia decomposition is carried out without formation of hydrazine.

7.  A method for the catalytic decomposition of ammonia for the production of hydrogen which is carried out with a metal oxynitride catalyst.

8.  An ammonia fuel cell for the catalytic decomposition of ammonia comprising

    (a) an ammonia inlet;
    (b) at least one reactor zone comprising a metal oxynitride catalyst and
    (c) an hydrogen outlet.

**Patentansprüche**

1.  Verwendung von einem Metalloxynitrid als ein Katalysator zur Zersetzung von Ammoniak für die Herstellung von Wasserstoff.

2.  Verwendung nach Anspruch 1, wobei die Zersetzung bei einer Temperatur von mindestens 300°C durchgeführt wird.

3.  Verwendung nach Anspruch 1 oder 2, wobei der Katalysator eine Stickstoff-leitende Metalloxynitridphase umfasst.

4.  Verwendung nach einem der Ansprüche 1-3, wobei der Katalysator ein Zirkoniumoxynitrid ist.

5.  Verwendung nach Anspruch 4, wobei der Katalysator eine β"-Zirkoniumoxynitridphase umfasst.

6.  Verwendung nach einem der Ansprüche 1-5, wobei eine Ammoniakzersetzung ohne Bildung von Hydrazin durchgeführt wird.

7.  Verfahren zur katalytischen Zersetzung von Ammoniak für die Herstellung von Wasserstoff, welches mit einem Metalloxynitrid-Katalysator durchgeführt wird.

8.  Ammoniak-Brennstoffzelle zur katalytischen Zersetzung von Ammoniak umfassend:

    (a) ein Ammoniak-Einlass;
    (b) mindestens eine Reaktorzone umfassend einen Metalloxynitrid-Katalysator und
    (c) ein Wasserstoff-Auslass.

**Revendications**

1.  Utilisation d'un oxynitrure métallique comme catalyseur pour la décomposition de l'ammoniac pour la production d'hydrogène.

2.  Utilisation selon la revendication 1, où la décomposition est réalisée à une température d'au moins 300°C.

3.  Utilisation selon la revendication 1 ou 2, où le catalyseur comprend une phase d'oxynitrure métallique conduisant l'azote.

4.  Utilisation selon l'une quelconque des revendications 1-3, où le catalyseur est un oxynitrure de zirconium.

5.  Utilisation selon la revendication 4, où le catalyseur comprend une phase β" d'oxynitrure de zirconium.

6.  Utilisation selon l'une quelconque des revendications 1-5, où la décomposition de l'ammoniac est réalisée sans formation d'hydrazine.

7.  Procédé de décomposition catalytique de l'ammoniac pour la production d'hydrogène, qui est réalisé avec un catalyseur oxynitrure métallique.

8.  Cellule combustible à l'ammoniac pour la décomposition catalytique de l'ammoniac, comprenant :

    (a) une entrée d'ammoniac ;
    (b) au moins une zone de réaction, comprenant un catalyseur oxynitrure métallique, et
    (c) une sortie d'hydrogène.

Figure 1

Figure 2

Figure 3

Figure 4

Figure 5

## REFERENCES CITED IN THE DESCRIPTION

### Patent documents cited in the description

- GB 1126813 A
- WO 03053913 A1
- US 3730774 A
- US 20040253492 A

### Non-patent literature cited in the description

- **J. WENDEL ; M. LERCH ; W. LAQUA.** *J. Solid State Chem.,* 1999, vol. 142, 163-167
- **M. KILO ; A.M. TAYLOR ; C. ARGIRUSIS ; G. BORCHARDT ; M. LERCH ; O. KAITASOV ; B. LESAGE.** *PCCP,* 2004, vol. 6 (13), 3645-3649
- **M. LERCH ; O. RAHÄUSER.** *J. Mat. Sci.,* 1997, vol. 32, 1357-1363
- **A.T. THAM ; C. RÖDEL ; M. LERCH ; D. WANG ; D.S. SU ; A. KLEIN-HOFFMAN ; R. SCHLÖGL.** *Cryst. Res. Techn.,* 2004, vol. 39 (5), 421-428
- **A.T. THAM ; C. RÖDEL ; M. LERCH ; D.S. SU ; A. KLEIN-HOFFMAN ; R. SCHLÖGL.** *Cryst. Res. Techn.,* 2005, vol. 40 (3), 193-198
- **M. LERCH.** *J. Am. Ceram. Soc.,* 1996, vol. 79 (10), 2641-2644
- BASF Aktiengesellschaft Ludwigshafen. **H. BAKEMEIER ; H. GRÖSSLING ; R. KRABETZ.** Ullmans Enzyklopädie der technischen Chemie. 1973, vol. 7, 444-513
- **D.A. SHIRLEY.** High-resolution X-ray photoemission spectrum of the valence bands of Gold. *Phys. Rev.. B: Solid State,* 1972, vol. 5 (12), 4709-4714
- Practical Surface Analysis. **BRIGGS ; SEAH.** Auger and X-ray Photoelectron Spectroscopy. Wiley, 1990, vol. 1, 635-638